(19) Europäisches Patentamt
European Patent Office
Office européen des brevets

(11) **EP 2 592 880 A1**

(12) **EUROPEAN PATENT APPLICATION**
published in accordance with Art. 153(4) EPC

(43) Date of publication:
**15.05.2013 Bulletin 2013/20**

(51) Int Cl.:
**H04W 52/24** *(2009.01)* **H04W 52/26** *(2009.01)*

(21) Application number: **11803488.3**

(22) Date of filing: **29.06.2011**

(86) International application number:
**PCT/JP2011/064941**

(87) International publication number:
**WO 2012/005154 (12.01.2012 Gazette 2012/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.07.2010 JP 2010154554**

(71) Applicant: **NTT DOCOMO, INC.**
**Chiyoda-ku**
**Tokyo**
**100-6150 (JP)**

(72) Inventors:
• **KIYOSHIMA, Kohei**
**Tokyo 100-6150 (JP)**
• **OKUBO, Naoto**
**Tokyo 100-6150 (JP)**
• **ISHII, Hiroyuki**
**Tokyo 100-6150 (JP)**

(74) Representative: **HOFFMANN EITLE**
**Patent- und Rechtsanwälte**
**Arabellastrasse 4**
**81925 München (DE)**

(54) **BASE STATION APPARATUS AND METHOD**

(57) A base station includes a first target receiving power calculation unit that calculates first target receiving power for controlling transmission power based on a path loss and a first parameter used by the user equipment transmitting user data in a predetermined sub-frame through an uplink shared channel to control the transmission power, a difference calculation unit that calculates, based on the path loss, a difference between the first target receiving power and second target receiving power used by the user equipment transmitting the user data through the uplink shared channel at every constant interval to control the transmission power, a second parameter calculation unit that calculates a second parameter by subtracting the difference from the first parameter, and a notification unit that reports the second parameter. The first target receiving power calculation unit calculates the first target receiving power to be greater as the path loss becomes smaller.

FIG.5

PATH LOSS CALCULATION UNIT — 3042

PATH LOSS DETERMINATION UNIT — 3044

PARAMETER CALCULATION UNIT — 3046

FIRST PARAMETER → FIRST TARGET RECEIVING POWER CALCULATION UNIT — 3048

Δ TARGET CALCULATION UNIT — 3050

SECOND PARAMETER CALCULATION UNIT — 3052

TO LAYER 1 PROCESSOR 306

EP 2 592 880 A1

**Description**

TECHNICAL FIELD

The present invention relates to a radio communication system.

BACKGROUND ART

Specifications of LTE (Long Term Evolution) have been developed by 3GPP (the 3rd Generation Partnership Project) which is the standardization organization of W-CDMA (Wideband Code Division Multiple Access). LTE is a standard that has been evolved beyond HSPA (High Speed Packet Access) being enhanced technology of W-CDMA. LTE realizes high speed communication of greater than or equal to 100 Mbps for downlink and greater than or equal to 50 Mbps for uplink. LTE improves the latency and the efficiency of frequency utilization.

In LTE, the transmission power control (TPC: transmission power control) may be performed so that a receiving SIR becomes greater as a path loss becomes smaller. The transmission power control is referred to as fractional transmission power control (Fractional TEP).

RELATED ART DOCUMENT

[NON-PATENT DOCUMENT]

Non-Patent Document 1: 3GPP TS36.213 V9.2.0 2010 06

SUMMARY OF THE INVENTION

PROBLEM TO BE SOLVED BY THE INVENTION

In LTE, dynamic scheduling is employed. In the dynamic scheduling, resource blocks corresponding to divided transmission slots or divided frequency bands of the transmission slots are allocated to a mobile station (user equipment), depending on a condition of a reception channel. When the fractional TPC is applied to the dynamic scheduling, the transmission power is controlled so that the receiving SIR becomes higher as the path loss becomes smaller, and that the receiving SIR becomes smaller as the path loss becomes greater. By the fractional TPC, a high throughput is realized at a central area of a cell. Since the high throughput is realized at the central area, the dynamic scheduling is preferably applied to data communication.

In LTE, semi-persistent scheduling is employed along with the dynamic scheduling. In the semi-persistent scheduling, radio resources at corresponding constant intervals are statically allocated to the mobile station. The semi-persistent scheduling is preferably applied to packet data for which the transmission rate is substantially constant, such as cases of voice communication or streaming.

However, for voice communication, for example, required transmission rates are the same for a central area of a cell and for an edge area of the cell. Therefore, when the fractional TPC is applied to the semi-persistent scheduling, the quality may exceed sufficiency at the central area of the cell.

The present invention has been achieved by considering the above-described problem. An objective of the present invention is to provide a base station and a method with which transmission power control can be suitably performed for a mobile station that performs voice communication based on semi-persistent scheduling.

MEANS FOR SOLVING THE PROBLEM

The base station is a base station that performs radio communication with user equipment, the base station including

a path loss calculation unit that calculates a path loss for the user equipment;

a first target receiving power calculation unit that calculates first target receiving power based on the path loss and a first parameter, wherein the first parameter is used by the user equipment that transmits user data in a predetermined sub-frame through an uplink shared channel when the user equipment controls transmission power, and the first target receiving power is for the user equipment that transmits the user data in the predetermined sub-frame through the uplink shared channel when the user equipment controls the transmission power;

a difference calculation unit that calculates a difference between the first target receiving power that has been calculated by the first target receiving power calculation unit based on the path loss and a second target receiving power that is to be used by the user equipment when the user equipment controls the transmission power, the user equipment transmitting the user data through the uplink shared channel at every constant interval;

a second parameter calculation unit that calculates a second parameter by subtracting the difference that has been calculated by the difference calculation unit from the first parameter; and

a notification unit that reports the second parameter that has been calculated by the second parameter calculation unit, wherein the first target receiving power calculation unit calculates the first target receiving power such that the first target receiving power becomes greater as the path loss becomes smaller.

The method is a method of a base station that performs radio communication with user equipment, the method including

a path loss calculation step of calculating a path loss for the user equipment;

a first target receiving power calculation step of calculating a first target receiving power based on the path loss and a first parameter, wherein the first parameter is to be used by the user equipment that transmits user data in a predetermined sub-frame through an uplink shared channel when the user equipment controls transmission power, and the first target receiving power is for the user equipment that transmits the user data in the predetermined sub-frame through the uplink shared channel when the user equipment controls the transmission power;

a difference calculation step of calculating a difference between the first target receiving power that has been calculated by the first target receiving power calculation step based on the path loss and a second target receiving power, wherein the second target receiving power is for the user equipment to control the transmission power, the user equipment transmitting the user data through the uplink shared channel at every constant interval;

a second parameter calculation step of calculating a second parameter by subtracting the difference that has been calculated by the difference calculation step from the first parameter; and

a notification step of reporting the second parameter that has been calculated by the second parameter calculation step, wherein the first target receiving power calculation step calculates the first target receiving power such that the first target receiving power becomes greater as the path loss becomes smaller.

EFFECT OF THE PRESENT INVENTION

According to the disclosed base station and method, the transmission power control can be suitably performed for the mobile station that performs the voice communication based on the semi-persistent scheduling.

BRIEF DESCRIPTION OF THE DRAWINGS

FIG. 1 is a schematic diagram showing an environment to which an eNodeB according to an embodiment is adopted;
FIG. 2 is a schematic diagram showing an example of a relationship between path loss and target receiving power;
FIG. 3 is a schematic diagram showing an example of a relationship between the path loss and the target receiving power;
FIG. 4 is a functional block diagram showing the eNodeB according to the embodiment;
FIG. 5 is a functional block diagram showing the eNodeB according to the embodiment; and
FIG. 6 is a flowchart showing an example of operations of the eNodeB according to the embodiment.

EMBODIMENTS FOR CARRYING OUT THE INVENTION

Hereinafter, there will be explained a configuration for implementing the present invention based on the following embodiment while referring to the figures. In all the figures for explaining the embodiment, repeated explanations are omitted by using the same reference numerals for elements having the same functions.

<Embodiment>

<System>

There will be explained an environment to which a base station (an eNodeB) according to the embodiment is applied.
The environment to which the base station is adopted may be an environment where plural mobile communication systems coexist. The mobile communication systems include a mobile communication system based on the Evolved UTRA and UTRAN scheme. The mobile communication system based on the Evolved UTRAN and UTRAN is also referred to as LTE. Further, a mobile communication system based on the W-CDMA scheme may be included.

An area covered by the base station includes one or more cells. The cells include cells that are capable of radio communications in the same frequency range. The cells that are capable of radio communications in the same frequency range may be referred to as a frequency layer.

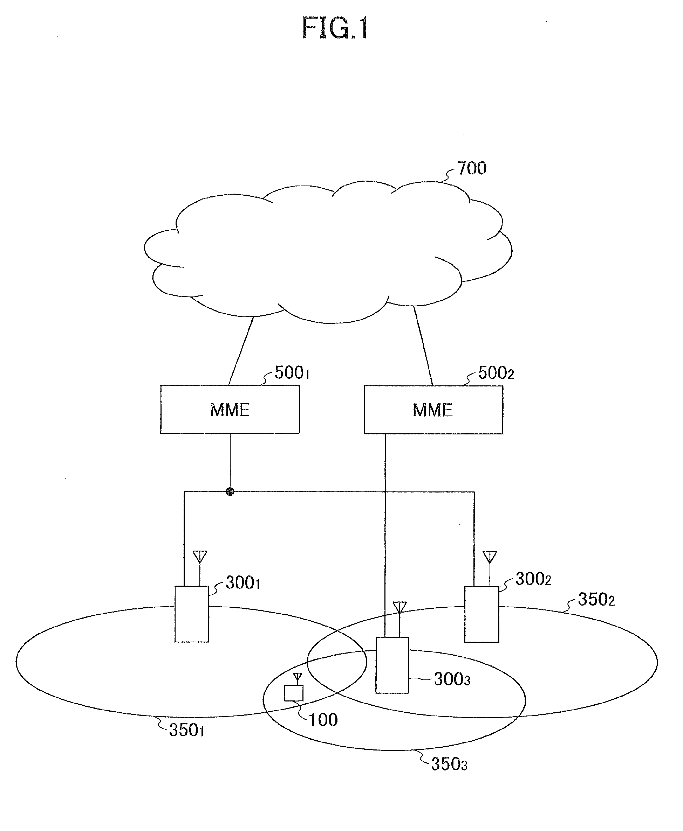

FIG. 1 is a schematic diagram showing an example of the environment to which the base station is adopted. In FIG. 1, as an example, there are indicated an eNodeB $300_n$ (n is an integer such that n>1) according to the LTE scheme and an area covered by the eNodeB $300_n$. The area includes a cell $350_n$ in which wireless communication with user equipment 100 is enabled. The area may include a cell in which wireless communication is enabled when a frequency band other than the frequency band that is used for the wireless communication with the user equipment 100 is used. Further, a cell covered by an eNodeB (not shown) other than the eNodeB $300_n$ may coexist. Further, another cell may coexist in which wireless communication is enabled by wireless access technology other than LTE. The wireless access technology other than LTE may include W-CDMA.

The eNodeB $300_n$ is connected to a mobility management entity (MME: Mobility Management Entity) $500_m$ (m is an integer such that m>0). The MME may be realized as a mobile switching center. The MME $500_m$ is connected to a core network 700.

In FIG. 1, as an example, three eNodeBs are shown. Further, two MMEs are shown in FIG. 1. The eNodeBs $300_1$ and $300_2$ are connected to the MME $500_1$. The eNodeB $300_3$ is connected to MME $500_2$.

User equipment (mobile station) 100 according to the embodiment is capable of wireless communication based on the LTE scheme. The user equipment 100 that is capable of the wireless communication based on the LTE scheme may be capable of wireless communication based on the W-CDMA scheme. In other words, the user equipment 100 may be a dual mode terminal. The dual mode terminal is capable of wireless communication based on an already existing mobile communication system such as a W-CDMA system, as well as wireless communication based on a newly introduced mobile communication system such as an LTE system.

<eNodeB>

The eNodeB $300_n$ is connected to the MME $500_m$. The MME $500_m$ is connected to the core network 700. The eNodeB $300_n$ covers the cell $350_n$. The user equipment 100 performs communications with the eNodeB $300_n$ by the Evolved UTRA and UTRAN scheme in the cell $350_n$. The MME may be realized together with a serving gateway (SGW: Serving GateWay). The MME/S-GW may also be referred to as an access gateway. The eNodeB $300_n$ may be connected to an evolved packet core (EPC: Evolved Packet Core) (not shown).

One or more eNodeBs may be connected to the MME/SGW.

<Transmission power control method>

The eNodeB $300_n$ performs transmission power control. For example, the eNodeB $300_n$ sets a coefficient $\alpha$ to be used when the user equipment 100 sets transmission power. The coefficient $\alpha$ may be different for each cell. The coefficient $\alpha$ is wirelessly transmitted as broadcast information to the user equipment 100 being served. Further, the eNodeB $300_n$ sets reference values of uplink shared channel transmission power to be used by the user equipment 100 for transmitting user data. One of the reference values of the uplink shared channel transmission power may be denoted as "$P_{0\_PUSCH}$." The eNodeB $300_n$ sets a first parameter as the one of the reference values of the uplink shared channel transmission power. The first parameter may be denoted as "$P_{0\_NOMINAL\_PUSCH}$." The eNodeB $300_n$ wirelessly transmits the first parameter as broadcast information. Further, the eNodeB $300_n$ sets a second parameter for the other reference value of the uplink shared channel transmission power. The eNodeB $300_n$ wirelessly transmits the second parameter through a dedicated channel.

For example, the user equipment 100 estimates a downlink path loss. The path loss may be reported to the eNodeB $300_n$. Further, the path loss may be estimated by the eNodeB $300_n$. The user equipment 100 performs power control based on the path loss. For example, the user equipment 100 controls the transmission power of the uplink shared channel in accordance with the expression (1).

$$P_{PUSCH} = \min\{P_{max},\ 10\ \log_{10} M_{PUSCH} + P_{0\_PUSCH} + \alpha \times PL + f(i)\} \quad (1)$$

In the expression (1), $P_{max}$ is the transmission power of the user equipment 100 to be set in advance. $M_{PUSCH}$ is a bandwidth of the uplink shared channel. The bandwidth may be represented by the number of resource blocks. $P_{0\_PUSCH}$ is the reference value of the uplink shared channel transmission power, and it is reported by the eNodeB $300_n$.

Further, $\alpha$ is a coefficient, and it is reported by the eNodeB $300_n$. PL is the path loss. Further, "f(i)" is a correction value, and "i" indicates a sub-frame.

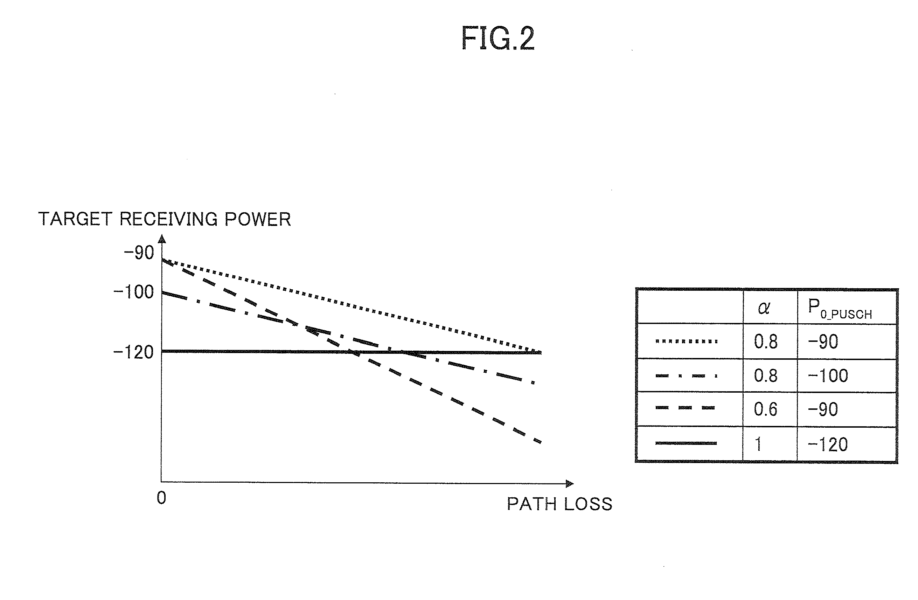

FIG. 2 shows an example of a relationship between the path loss and target receiving power. In FIG. 2, the relationship between the path loss and the target receiving power is shown. The target receiving power is a target value for the eNodeB $300_n$ regarding the receiving power of the uplink shared channel transmitted by the user equipment 100.

According to FIG. 2, the relationship between the path loss and the target receiving power varies depending on the values of $P_{0\_PUSCH}$ and $\alpha$. The inclination varies depending on $\alpha$. When the path loss is zero, the value of the target power becomes $P_{0\_PUSCH}$.

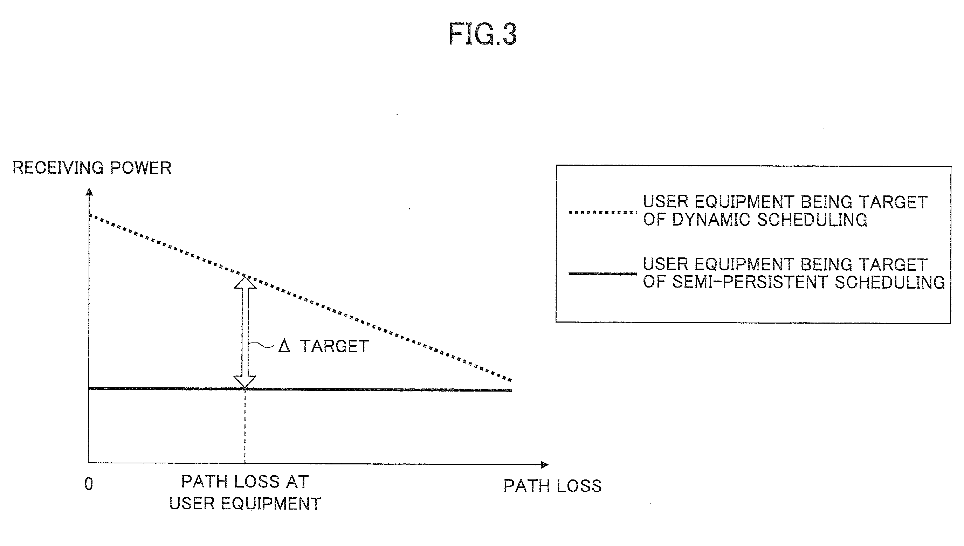

FIG. 3 shows the first parameter and the second parameter to be reported by the eNodeB $300_n$. FIG. 3 shows the relationship between the path loss and the receiving power. The receiving power is the receiving power received by the eNodeB $300_n$ of the uplink shared channel transmitted by the user equipment 100.

FIG. 3 indicates a relationship between the path loss and the receiving power corresponding to user equipment which is a target for the dynamic scheduling and a relationship between the path loss and the receiving power corresponding to user equipment which is a target for the semi-persistent scheduling.

For the dynamic scheduling, a process is performed for sorting (selecting) the user equipment that transmits user data using the uplink shared channel in a predetermined sub-frame. The dynamic scheduling may be performed in accordance with a scheduling request from the user equipment 100. The scheduling request is a signal for requesting resource allocation for the uplink. In the dynamic scheduling, the transmission power is controlled based on the first parameter.

For the semi-persistent scheduling, a process is performed for allocating radio resources to the user equipment. The radio resources are for transmitting user data using the uplink shared channel at the corresponding constant intervals. For a system which adopts the semi-persistent scheduling, a state where the data is transmitted is referred to as talk spurt.

According to FIG. 3, in the dynamic scheduling, the transmission power is controlled so that the receiving power of the uplink shared channel from the user equipment 100 becomes greater as the user equipment 100 becomes closer to a central area of the cell. In other words, in the fractional transmission power control, the transmission power is controlled such that the receiving SIR becomes greater as the path loss becomes smaller, and that the receiving SIR becomes smaller as the path loss becomes greater. The throughput can be increased by controlling the transmission power so that the receiving power becomes greater as the position becomes closer to the central area of the cell. On the other hand, the transmission power is controlled so that the receiving power of the uplink shared channel from the user equipment 100 becomes smaller as the user equipment 100 becomes closer to an edge area of the cell. By controlling the transmission power so that the receiving power becomes smaller as the position becomes closer to the edge area of the cell, interference from other cells can be reduced.

In the semi-persistent scheduling, the transmission power is controlled so that the receiving power of the uplink shared channel from the user equipment 100 is the same, regardless of whether the user equipment 100 is closer to the central area of the cell or the edge area of the cell. That is because the necessary rates are substantially the same regardless of the location of the user equipment.

The eNodeB $300_n$ obtains a first target receiving power based on the coefficient $\alpha$, the first parameter, and the path loss. For example, by using the relationship between the path loss and the receiving power shown in FIG. 3, the receiving power corresponding to the path loss is obtained from the characteristic of the user equipment which is a target of the dynamic scheduling, and thereby the first target receiving power is obtained.

The eNodeB $300_n$ sets the second parameter. For example, a difference is obtained between the first target receiving power and the relationship of the user equipment which is the target of the semi-persistent scheduling. The difference is denoted by "$\Delta$ target" in FIG. 3. The second parameter is defined to be a value which is obtained by subtracting the $\Delta$ target from the first parameter. By setting the second parameter to be the value obtained by subtracting the $\Delta$ target from the first parameter and by reporting, through the dedicated channel, the second parameter to the user equipment 100 which is the target of the semi-persistent scheduling, the user equipment 100 can control the transmission power so that the receiving power of the uplink shared channel at the eNodeB $300_n$ becomes the same, regardless of the location within the cell.

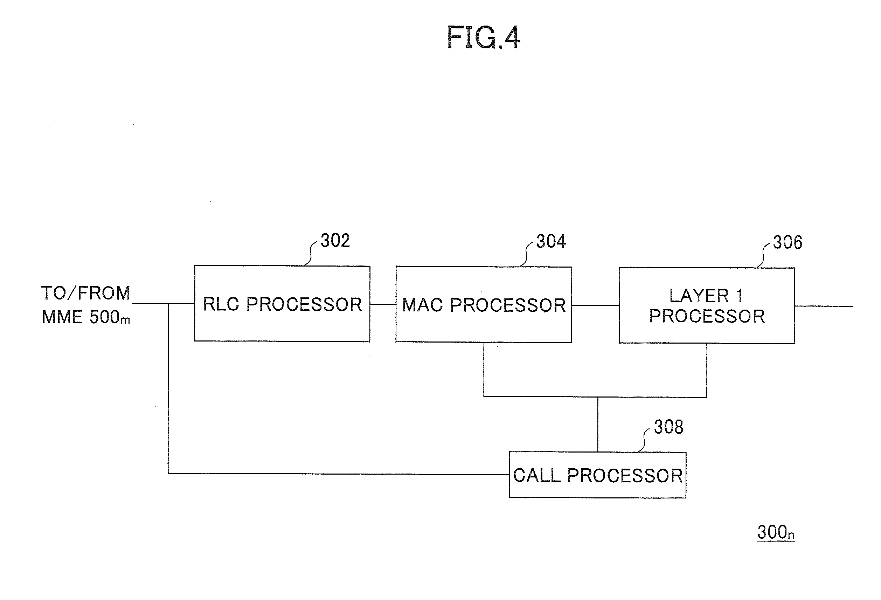

FIG. 4 shows the eNodeB $300_n$ according to the embodiment. In the embodiment, the control regarding the uplink is mainly explained. However, it may be applied to the downlink appropriately.

The eNodeB $300_n$ includes an RLC (Radio Link Control) processor 302.

The RLC processor 302 performs receiving processes of the RLC layer, such as segmentation and/or concatenation, and a receiving process in the RLC retransmission control regarding uplink data. The RLC processor 302 may perform a process of PDCP (Packet Data Convergence Protocol) layer as well as the processes of the RLC layer.

The eNodeB $300_n$ includes a MAC (Medium Access Control) processor 304.

The MAC processor 304 performs a receiving process of receiving uplink user data in the MAC retransmission control, a scheduling process, a selection process of selecting a transport format, and a process of allocating frequency resources.

The scheduling process includes the dynamic scheduling and the semi-persistent scheduling. In the process of selecting the transmission format, processes of determining a modulation scheme, a coding rate, and data size are performed regarding the user data to be transmitted by the user equipment that has been selected in the scheduling. The modulation scheme, the coding rate, and the data size are defined, for example, based on the SIR or the path loss of a reference signal for sounding, which is transmitted from the user equipment 100 in the uplink. In the process of allocating frequency resources, resource blocks are determined. The resource blocks are used for transmitting the user data by the user equipment selected by the scheduling. The resource blocks are determined, for example, based on the SIR of the reference signal for sounding, which is transmitted from the user equipment 100.

The MAC processor 304 inputs an uplink scheduling grant to the layer 1 processor 306. The uplink scheduling grant includes information regarding an ID of the user equipment that performs communication through a physical uplink shared channel, and information regarding the transport format of the user data of the user equipment. The physical uplink shared channel is determined by the scheduling process, the selection process of selecting the transport format, and the process of allocating frequency resources.

The MAC processor 304 performs transmission power control.

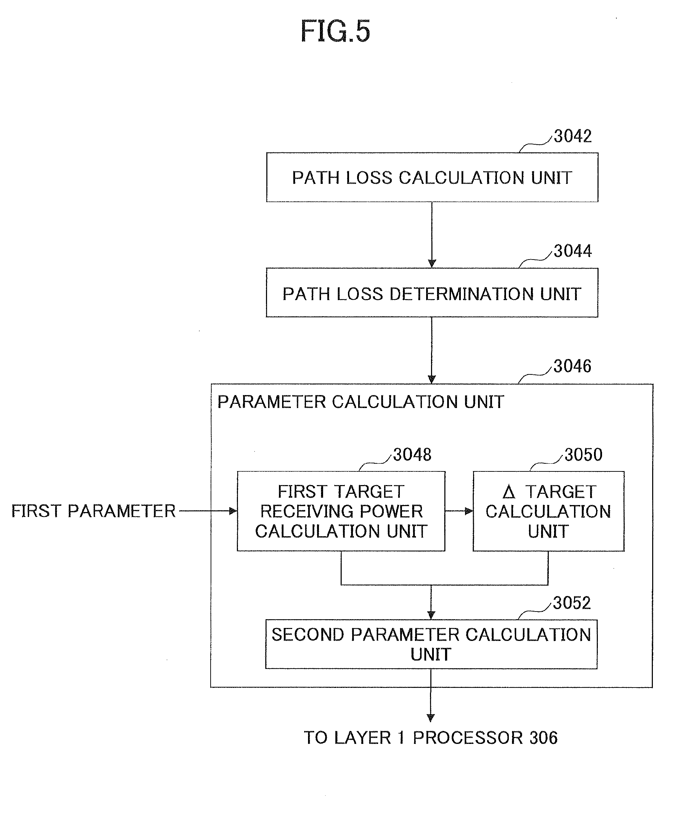

FIG. 5 shows functions regarding the transmission power control by the MAC processor 304.

The MAC processor 304 includes a path loss calculation unit 3042. The path loss calculation unit 3042 calculates (estimates) a path loss at the user equipment 100. The path loss may be calculated (estimated) by the user equipment 100 and reported to the eNodeB $300_n$. The path loss calculation unit 3042 inputs the path loss to a path loss determination unit 3044.

The MAC processor 304 includes the path loss determination unit 3044. The path loss determination unit 3044 determines whether the second parameter is to be changed based on the path loss that has been input by the path loss calculation unit 3042. For example, the path loss determination unit 3044 determines to change the second parameter, when the path loss has been changed relative to a previously calculated path loss by an amount that is greater than or equal to a predetermined threshold value. The previously calculated path loss is preferably the path loss for the time in which it has been determined to change the second parameter immediately prior to this time. On the other hand, when a variation of the path loss relative to the previously calculated path loss is less than the predetermined threshold value, the path loss determination unit 3044 determines not to change the second parameter. When the path loss determination unit 3044 has determined to change the second parameter, the path loss determination unit 3044 transmits an instruction to change the second parameter together with the value of the path loss to a parameter calculation unit 3046.

The MAC processor 304 includes the parameter calculation unit 3046. The parameter calculation unit 3046 is connected to the path loss determination unit 3044. When the path loss determination unit 3044 has transmitted the instruction to change the second parameter, the parameter calculation unit 3046 calculates the second parameter to be updated.

The parameter calculation unit 3046 includes a first target receiving power calculation unit 3048. The first target receiving power calculation unit 3048 is connected to the path loss determination unit 3044. The first target receiving power calculation unit 3048 calculates first target receiving power by using the path loss to be input by the path loss determination unit 3044 and the first parameter. For example, the first target receiving power calculation unit 3048 calculates the first target receiving power by obtaining the target receiving power corresponding to the path loss that has been input by the path loss determination unit 3044. Here, the target receiving power is obtained by using the relationship between the path loss and the receiving power, which has been explained by referring to FIG. 3. The first target receiving power calculation unit 3048 inputs the first target receiving power to a Δ target calculation unit 3050. Additionally, the first target receiving power calculation unit 3048 inputs the first parameter to a second parameter calculation unit 3052.

The parameter calculation unit 3046 includes the Δ target calculation unit 3050. The Δ target calculation unit 3050 is connected to the first target receiving power calculation unit 3048 and to the path loss determination unit 3044. The Δ target calculation unit 3050 calculates a Δ target by calculating a difference between the first target receiving power that has been input by the first target receiving power calculation unit 3048 and the receiving power corresponding to the user equipment which is the target of the semi-persistent scheduling. Depending on the path loss, the Δ target may be calculated based on the difference relative to the receiving power corresponding to predetermined user equipment which is the target of the dynamic scheduling. The Δ target calculation unit 3050 inputs the value of the Δ target to the second parameter calculation unit 3052.

The parameter calculation unit 3046 includes the second parameter calculation unit 3052. The second parameter calculation unit 3052 is connected to the first target receiving power calculation unit 3048 and to the Δ target calculation unit 3050. The second parameter calculation unit 3050 calculates the second parameter by calculating a value that is obtained by subtracting the Δ target to be input by the Δ target calculation unit 3050 from the first parameter to be input by the first target receiving power calculation unit 3048. The second parameter calculation unit 3052 inputs the second parameter to the layer 1 processor 306.

The eNodeB $300_n$ includes the layer 1 processor 306. The layer 1 processor 306 applies transmission processing such as channel coding and IFFT processing to the uplink scheduling grant from the MAC processor 304. The uplink scheduling grant is mapped onto a physical downlink control channel, which is a downlink control channel. Further, the layer 1 processor 306 applies the transmission processing such as the channel coding and the IFFT processing to the coefficient $\alpha$ and the first parameter from the MAC processor 304. The coefficient $\alpha$ and the first parameter are mapped onto the broadcast channel. Further, the layer 1 processor 306 applies the transmission processing such as the channel coding and the IFFT processing to the second parameter from the MAC processor 304. The second parameter is mapped onto the dedicated channel.

Further, the layer 1 processor 306 performs demodulation and decoding of a CQI (Channel Quality Indicator) and acknowledgement information that are mapped onto a physical uplink control channel, which is transmitted through the uplink. The layer 1 processor 306 inputs the decoded result to the MAC processor 304.

The eNodeB $300_n$ includes the call processor 308. The call processor 308 is connected to the MAC processor 304 and to the layer 1 processor 306. The call processor 308 performs call processing such as establishment or release of a communication channel, state management of the eNodeB $300_n$, and radio resource management.

<Operations of eNodeB>

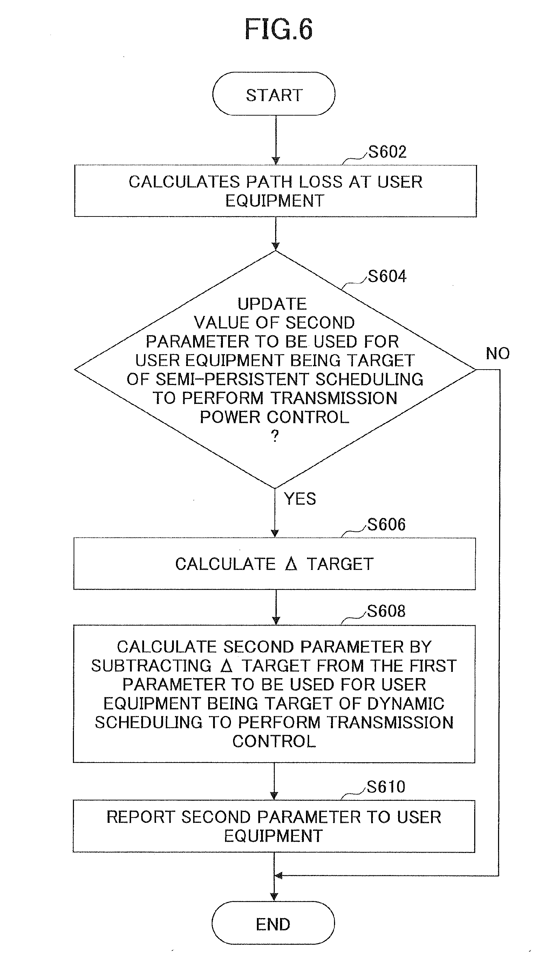

FIG. 6 shows an example of operations of the eNodeB $300_n$.

The eNodeB $300_n$ applies the persistent scheduling to the user equipment 100 that performs wireless communication with the eNodeB $300_n$, thereby performing voice communication. In other words, it may be in a talk-spurt state.

The eNodeB $300_n$ calculates a path loss of the user equipment 100 (step S602). For example, the path loss calculation unit 3042 calculates the path loss at the user equipment 100. In other words, it calculates the downlink path loss. The path loss may be calculated at every constant interval.

The eNodeB $300_n$ determines whether to update the value of the second parameter (step S604), which is to be used by the user equipment being the target of the semi-persistent scheduling when the user equipment performs the transmission power control. For example, the path loss determination unit 3044 determines that the second parameter is to be updated, when it is determined, based on the path loss from the path loss calculation unit 3042, that an amount of change relative to a path loss at a time of updating the second parameter prior to the calculation of the path loss is greater than or equal to the predetermined threshold value. Further, the path loss determination unit 3044 determines that the second parameter is not to be updated, when it is determined, based on the path loss from the path loss calculation unit 3042, that the amount of change relative to the path loss at the time of updating the second parameter prior to the calculation of the path loss is less than the predetermined threshold value.

When the eNodeB $300_n$ has determined to update the second parameter (step S604: YES), the eNodeB $300_n$ calculates the $\Delta$ target (step S606). For example, based on the path loss from the path loss determination unit 3044 and the first parameter, the first target receiving power calculation unit 3048 calculates the first target receiving power for the case where the user equipment 100 being the target of the dynamic scheduling performs the transmission power control. The $\Delta$ target calculation unit 3050 obtains the $\Delta$ target by calculating the difference between the receiving power corresponding to the user equipment being the target of the dynamic scheduling and the receiving power corresponding to the user equipment being the target of the semi-persistent scheduling, based on the first target receiving power that has been input by the first target receiving power calculation unit 3048 and the path loss that has been input by the path loss determination unit 3044. The $\Delta$ target may be calculated based on the difference relative to the receiving power that has been determined in advance so as to correspond to the path loss. Here, the receiving power corresponds to the user equipment being the target of the dynamic scheduling.

The eNodeB $300_n$ calculates the second parameter by subtracting the $\Delta$ target that has been calculated at step S606 from the first parameter to be used by the user equipment 100 being the target of the dynamic scheduling for performing the transmission power control (step S608). For example, the second parameter calculation unit 3052 calculates the second parameter by calculating a value that is obtained by subtracting the $\Delta$ target to be input by the $\Delta$ target calculation unit 3050 from the first parameter to be input by the first target receiving power calculation unit 3048.

The eNodeB $300_n$ reports the second parameter to the user equipment 100 (step S610). For example, the layer 1 processor 306 applies the transmission processing such as the channel coding and the IFFT processing to the second parameter from the MAC processor 304. The second parameter is mapped onto the dedicated channel. The second parameter is transmitted through the dedicated channel.

When it is determined at step S604 that the value of the second parameter is not to be updated (step S604: NO), the process terminates.

According to the embodiment, when the fractional TPC is applied to the semi-persistent scheduling, the transmission power can be controlled so that the transmission rates are almost the same within the cell. When the transmission power is controlled, the notification can be made by using the already existing channel, without introducing a new means for notifying.

The base station is a base station that performs wireless communication with user equipment, the base station including

a path loss calculation unit that calculates a path loss at the user equipment;

a first target receiving power calculation unit that calculates first target receiving power based on the path loss and a first parameter, wherein the first parameter is used by the user equipment that transmits user data in a predetermined sub-frame through an uplink shared channel when the user equipment controls transmission power, and the first target receiving power is for the user equipment that transmits the user data in the predetermined sub-frame through the uplink shared channel when the user equipment controls the transmission power;

a difference calculation unit as a $\Delta$ target calculation unit that calculates a difference between the first target receiving power that has been calculated by the first target receiving power calculation unit based on the path loss and a second target receiving power that is to be used by the user equipment when the user equipment controls the transmission power, the user equipment transmitting the user data through the uplink shared channel at every constant interval;

a second parameter calculation unit that calculates a second parameter by subtracting the difference calculated by the difference calculation unit from the first parameter; and

a notification unit as a layer 1 processor that reports the second parameter that has been calculated by the second parameter calculation unit,

wherein the first target receiving power calculation unit calculates the first target receiving power such that the first target receiving power becomes greater as the path loss becomes smaller.

For the case where the fractional transmission power control is applied to the semi-persistent scheduling, the transmission power can be controlled so that the transmission rates in the cell become almost the same in the cell.

Further, there is included a path loss determination unit that determines whether an amount of change between the path loss that has been calculated by the path loss calculation unit and the path loss at a time at which the second parameter has been updated immediately prior to the calculation is greater than or equal to a predetermined threshold value,

wherein the first target receiving power calculation unit calculates the first target receiving power when the path loss determination unit has determined that the amount of change is greater than or equal to the threshold value,

wherein the difference calculation unit calculates the difference based on the first target receiving power that has been calculated by the first target receiving power calculation unit, and

wherein the second parameter calculation unit calculates the second parameter by subtracting the difference that has been calculated by the difference calculation unit from the first parameter.

The transmission power can be controlled to follow the change in the environment.

Further, the notification unit reports the second parameter that has been calculated by the second parameter calculation unit through a dedicated channel.

When the transmission power is controlled, it can be reported through the already existing channel without introducing a new means for reporting.

The method is a method of a base station that performs wireless communication with user equipment, the method including

a path loss calculation step of calculating a path loss at the user equipment;

a first target receiving power calculation step of calculating a first target receiving power based on the path loss and a first parameter, wherein the first parameter is to be used by the user equipment that transmits user data in a predetermined sub-frame through an uplink shared channel when the user equipment controls transmission power, and the first target receiving power is for the user equipment that transmits the user data in the predetermined sub-frame through the uplink shared channel when the user equipment controls the transmission power;

a difference calculation step of calculating a difference between the first parameter and a second target receiving power based on the path loss, wherein the second target receiving power is for the user equipment to control the transmission power, the user equipment transmitting the user data through the uplink shared channel at every constant interval;

a second parameter calculation step of calculating a second parameter by subtracting the difference that has been calculated by the difference calculation step from the first parameter; and

a notification step of reporting the second parameter that has been calculated by the second parameter calculation step,

wherein the first target receiving power calculation step calculates the first target receiving power such that the first target receiving power becomes greater as the path loss becomes smaller.

For convenience of the explanations, specific examples of numerical values have been used in order to facilitate understanding of the invention. However, these numerical values are simply illustrative, and any other appropriate values may be used, except as indicated otherwise.

In the above, the explanation has been provided while referring to specific embodiments, but the embodiments are merely illustrative, and variations, modifications, alterations and substitutions could be conceived by those skilled in the art. For the convenience of explanation, the devices according to the embodiments of the present invention have been explained by using functional block diagrams. However, these devices may be implemented in hardware, software, or combinations thereof. The present invention is not limited to the above-described embodiments, and various variations, modifications, alterations, substitutions and so on are included, without departing from the spirit of the present invention.

The present international application claims priority based on Japanese Patent Application No. 2010-154554, filed on July 7, 2010, the entire contents of which are hereby incorporated by reference.

LIST OF REFERENCE SYMBOLS

> 100: User equipment
> $300_n$ (n is an interger such that n>0): Base station (eNB: evolved Node B)
> 302: RLC (Radio Link Control) processor
> 304: MAC (Medium Access Control) processor
> 3042: Path loss calculation unit
> 3044: Path loss determination unit
> 3046: Parameter calculation unit
> 3048: First target receiving power calculation unit
> 3050: Δ target calculation unit
> 3052: Second parameter calculation unit
> 306: Layer 1 processor
> 308: Call processor
> $350_n$ (n is an integer such that n>0): Cell
> $500_m$ (m is an integer such that m>0): Mobility management entity (MME: Mobility Management Entity)
> 700: Core network (CN: Core Network)

**Claims**

1. A base station that performs wireless communication with user equipment, the base station comprising:

> a path loss calculation unit that calculates a path loss at the user equipment;
> a first target receiving power calculation unit that calculates first target receiving power based on the path loss and a first parameter, wherein the first parameter is used by the user equipment that transmits user data in a predetermined sub-frame through an uplink shared channel when the user equipment controls transmission power, and the first target receiving power is for the user equipment that transmits the user data in the predetermined sub-frame through the uplink shared channel when the user equipment controls the transmission power;
> a difference calculation unit that calculates a difference between the first target receiving power that has been calculated by the first target receiving power calculation unit based on the path loss and a second target receiving power that is to be used by the user equipment when the user equipment controls the transmission power, the user equipment transmitting the user data through the uplink shared channel at every constant interval;
> a second parameter calculation unit that calculates a second parameter by subtracting the difference calculated by the difference calculation unit from the first parameter; and
> a notification unit that reports the second parameter that has been calculated by the second parameter calculation unit,
> wherein the first target receiving power calculation unit calculates the first target receiving power such that the first target receiving power becomes greater as the path loss becomes smaller.

2. The base station according to claim 1, further comprising:

> a path loss determination unit that determines whether an amount of change between the path loss that has been calculated by the path loss calculation unit and the path loss at a time of updating the second parameter immediately prior to the calculation is greater than or equal to a predetermined threshold value,
> wherein the first target receiving power calculation unit calculates the first target receiving power when the path loss determination unit has determined that the amount of change is greater than or equal to the threshold value,
> wherein the difference calculation unit calculates the difference based on the first target receiving power that has been calculated by the first target receiving power calculation unit, and
> the second parameter calculation unit calculates the second parameter by subtracting the difference that has been calculated by the difference calculation unit from the first parameter.

3. The base station according to claim 1 or claim 2,
   wherein the notification unit reports the second parameter that has been calculated by the second parameter calculation unit through a dedicated channel.

4. A method of a base station that performs wireless communication with user equipment, the method comprising:

   a path loss calculation step of calculating a path loss at the user equipment;
   a first target receiving power calculation step of calculating a first target receiving power based on the path loss and a first parameter, wherein the first parameter is to be used by the user equipment that transmits user data in a predetermined sub-frame through an uplink shared channel when the user equipment controls transmission power, and the first target receiving power is for the user equipment that transmits the user data in the predetermined sub-frame through the uplink shared channel when the user equipment controls the transmission power;
   a difference calculation step of calculating a difference between the first parameter and a second target receiving power based on the path loss, wherein the second target receiving power is for the user equipment to control the transmission power, the user equipment transmitting the user data through the uplink shared channel at every constant interval;
   a second parameter calculation step of calculating a second parameter by subtracting the difference that has been calculated by the difference calculation step from the first parameter; and
   a notification step of reporting the second parameter that has been calculated by the second parameter calculation step,
   wherein the first target receiving power calculation step calculates the first target receiving power such that the first target receiving power becomes greater as the path loss becomes smaller.

# FIG.1

# FIG.2

TARGET RECEIVING POWER

| | $\alpha$ | $P_{0\_PUSCH}$ |
|---|---|---|
| ·········· | 0.8 | −90 |
| —·—·— | 0.8 | −100 |
| — — — | 0.6 | −90 |
| —— | 1 | −120 |

# FIG.3

RECEIVING POWER

Δ TARGET

0    PATH LOSS AT
     USER EQUIPMENT

PATH LOSS

............ USER EQUIPMENT BEING TARGET
             OF DYNAMIC SCHEDULING

────── USER EQUIPMENT BEING TARGET
             OF SEMI-PERSISTENT SCHEDULING

# FIG.4

TO/FROM
MME 500m — [RLC PROCESSOR 302] — [MAC PROCESSOR 304] — [LAYER 1 PROCESSOR 306] —

[CALL PROCESSOR 308]

300n

# FIG.5

PATH LOSS CALCULATION UNIT — 3042

PATH LOSS DETERMINATION UNIT — 3044

PARAMETER CALCULATION UNIT — 3046

FIRST PARAMETER →

FIRST TARGET RECEIVING POWER CALCULATION UNIT — 3048

Δ TARGET CALCULATION UNIT — 3050

SECOND PARAMETER CALCULATION UNIT — 3052

TO LAYER 1 PROCESSOR 306

# FIG.6

START

S602

CALCULATES PATH LOSS AT USER
EQUIPMENT

S604

UPDATE
VALUE OF SECOND
PARAMETER TO BE USED FOR
USER EQUIPMENT BEING TARGET
OF SEMI-PERSISTENT SCHEDULING
TO PERFORM TRANSMISSION
POWER CONTROL
?

NO

YES

S606

CALCULATE Δ TARGET

S608

CALCULATE SECOND PARAMETER BY
SUBTRACTING Δ TARGET FROM THE FIRST
PARAMETER TO BE USED FOR USER
EQUIPMENT BEING TARGET OF DYNAMIC
SCHEDULING TO PERFORM TRANSMISSION
CONTROL

S610

REPORT SECOND PARAMETER TO USER
EQUIPMENT

END

<table>
<tr><td colspan="2" align="center">**INTERNATIONAL SEARCH REPORT**</td><td colspan="2">International application No.<br><br>PCT/JP2011/064941</td></tr>
<tr><td colspan="4">A.   CLASSIFICATION OF SUBJECT MATTER<br>*H04W52/24*(2009.01)i, *H04W52/26*(2009.01)i<br><br><br><br>According to International Patent Classification (IPC) or to both national classification and IPC</td></tr>
<tr><td colspan="4">B.   FIELDS SEARCHED</td></tr>
<tr><td colspan="4">Minimum documentation searched (classification system followed by classification symbols)<br>H04W4/00-99/00, H04B7/24-7/26<br><br><br></td></tr>
<tr><td colspan="4">Documentation searched other than minimum documentation to the extent that such documents are included in the fields searched<br>    Jitsuyo Shinan Koho      1922–1996   Jitsuyo Shinan Toroku Koho   1996–2011<br>    Kokai Jitsuyo Shinan Koho   1971–2011   Toroku Jitsuyo Shinan Koho   1994–2011</td></tr>
<tr><td colspan="4">Electronic data base consulted during the international search (name of data base and, where practicable, search terms used)<br><br><br></td></tr>
<tr><td colspan="4">C.   DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td align="center">A</td><td colspan="2">3GPP TS 36.213 V9.2.0, 2010.06, pp.9-12</td><td align="center">1-4</td></tr>
<tr><td align="center">A</td><td colspan="2">Ericsson, "Configuration of Semi-Persistent<br>Scheduling", 3GPP TSG-RAN WG2 #63bis, Tdoc<br>R2-085269, 2008.10, pp.1-8</td><td align="center">1-4</td></tr>
<tr><td colspan="4"><br><br><br><br><br><br><br><br><br><br><br><br><br><br><br></td></tr>
</table>

☐ Further documents are listed in the continuation of Box C.     ☐ See patent family annex.

| | Special categories of cited documents: | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>   22 July, 2011 (22.07.11) | Date of mailing of the international search report<br>   02 August, 2011 (02.08.11) |
|---|---|
| Name and mailing address of the ISA/<br>   Japanese Patent Office | Authorized officer<br><br> |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010154554 A